# EUROPEAN PATENT APPLICATION

(11) **EP 1 069 520 A2**
(43) Date of publication of application: **17.01.2001**
(21) Application number: 00305741.1
(22) Date of filing: 07.07.2000
(51) Int. Cl.: G06F 17/60

(54) **Integrated business information system and method**

(30) Priority: 13.07.1999 US 143599
(71) Applicant: Pfizer Products Inc., Groton, Connecticut 06340 (US)
(72) Inventor: Fliri, Anton Franz Josef, Groton, Connecticut 06340 (US); Dimmock, Mary Elizabeth, Groton, Connecticut 06340 (US)
(74) Representative: Eddowes, Simon

(57) **Abstract**

A system and method for the integration of business information programs are disclosed. The system and method allow a user to jump between different business information programs (e.g., programs concerning patents and the compositions they cover, programs concerning what commercial products are covered by patents, and programs concerning the companies that produce the commercial products), that is, to jump from a first program to a second program, so that the user automatically executes the second program (the program to which the jump is made) at a hierarchical level (state) that is similar to the hierarchical level (state) at which the user was executing the first program (the program from which the jump is made). Various techniques may be used to make the jump and to insure that the user executes the second program at the hierarchically similar level (state). The system may further employ visualization techniques to display the data, such as hyperbolic trees, as well as querying and analysis techniques.

## Description

### FIELD OF THE INVENTION

The present invention relates generally to software integration systems and methods and, more particularly, to a system and method for the integration of business information programs.

### BACKGROUND OF THE INVENTION

As used herein, the term "business information program" means any program used in the ordinary course of business to store, track, and/or visualize business information. The term "hierarchically similar state" refers to a point in a first business information program that is related, in a predefined manner, to a second point in a second business information program. The term "translation intermediary" refers to a software construct that receives information and, in response, retrieves information that is related, in a predetermined way, to the received information. The term "link" (as differentiated from HTML link) means a software connection between at least two business information programs that allows a user to jump from a first business information program to a second business information program at a hierarchically similar state. The terms "initiating software" and "initiating program" refer to a business information program from which a link is executed. The terms "target software" and "target program" refer to a business information program that a link terminates in. The term "front-end web page" refers to an HTML document from which a plurality (two or more) of business information programs may be launched.

Although the system and method of this invention can be used in any industry, their use in the pharmaceutical industry will be exemplified.

Because of the increased pressure put on pharmaceutical companies to release more new drugs each year, many pharmaceutical companies are striving to increase their productivity. A major aspect of this effort is the management of information and the integration of this information management into the overall business. However, because of the enormous amount of information amassed by these companies and the large number of computer programs that they use, it is virtually impossible for them to efficiently use and search all the information and capabilities that these programs offer.

For example, a company may have separate programs to keep track of its competitors' public financial information, a separate program to search patent databases, and a separate program for tracking commercial product specifications. However, each software program is run separately and, in all likelihood, uses its own proprietary database. Accordingly, a user cannot easily retrieve hierarchically similar information from one program while using another.

For example, it is often desirable while retrieving information relating to a specific patent to retrieve financial information relating to the corporation that is the assignee or licensee of the patent and also to retrieve information relating to the commercial embodiment of the patent. Typically, to retrieve such information, a user is forced to exit the patent research program, start a financial information program, and perform a separate search to find the financial information about that corporation. This can be particularly difficult if the name of the corporation is unknown to the user or if the particular financial information program does not cross-reference patent numbers to corporate assignees or licensees. Even if the user is eventually able to locate the financial information being sought, the same sort of process must be repeated to retrieve information relating to the commercial embodiment of the patent. As before, this information can be particularly difficult to find if the user does not know the commercial name of the drug.

The art has attempted to solve this problem by adopting standardized methods of storing information. Using this method, databases are indexed in a uniform, predetermined manner that the industry has agreed upon. Thus, integration of different programs is simple, because each program is capable of interfacing with each other program's database. For example, in the medical field, many medical software providers have adopted the United Medical Language System (UMLS) and index their databases according to this structure. However, this approach has not been adopted in any other field and its acceptance has thus been limited solely to the medical field. Predefined databases allowing a single search in multiple databases are also known. Those predefined databases parse a single search into various strings that the different databases can accept.

Despite the long-standing need and the substantial efforts to provide integrated business systems, there is still a need for a system that can enable a user to efficiently navigate (browse) between or among a group of heterogeneous proprietary software programs and that allows such navigation (browsing) between hierarchically similar states in each program. There is also a long-standing need for a system that combines querying (both high-level and low-level), browsing, visualization, and analysis.

### SUMMARY OF THE INVENTION

A process and a system have now been developed that satisfy those needs and provide still other benefits and advantages that will be apparent to those skilled in the art from this disclosure.

Broadly speaking, the method of the present invention is a method for integrating a plurality of business information programs comprising at least a first business information program and a second business information program, there being a link between the business information programs and a linking means for executing the link, the method comprising:
a) executing the first business information program;
b) executing the linking means while executing the first business information program, thereby causing the linking means to retrieve information from the first business information program, the first business information program being in a hierarchical state and the retrieved information comprising hierarchical information concerning the hierarchical state of the first business information program;
c) transmitting the retrieved information from the first business information program to the second business information program through the link; and
d) executing the second business information program utilizing the hierarchical information so that the second business information program is executed in a hierarchically similar state to the first business information program.

In another embodiment, the method of the present invention is a method for integrating a plurality of business information programs comprising at least a first business information program and a second business information program, there being a link between the business information programs and a linking means for executing the link, the method comprising:
a) executing the first business information program;
b) executing the linking means while executing the first business information program, thereby causing the linking means to retrieve information from the first business information program, the first business information program being in a hierarchical state and the retrieved information comprising first hierarchical information concerning the hierarchical state of the first business information program;
c) transmitting the retrieved information from the first business information program to a translation intermediary, the translation intermediary having stored data;
d) cross-referencing the retrieved information with the stored data in the translation intermediary, wherein the cross-referenced stored data comprises second hierarchical information concerning the desired hierarchical state of the second business information program;
e) retrieving from the stored data at least some of the data that have been cross-referenced with the retrieved information, the retrieved cross-referenced data including the second hierarchical information;
f) transmitting the retrieved cross-referenced data to the second business information program; and
g) executing the second business information program utilizing the retrieved cross-referenced data so that the second business information program is executed in a hierarchically similar state to the first business information program.

In another aspect, the present invention concerns an integrated business information system comprising:
a) storage means for storing a plurality of business information programs comprising at least first and second business information programs;
b) processor means for executing the plurality of business information programs;
c) a link for linking the plurality of business information programs;
d) means for executing the first business information program;
e) linking means for executing the link while executing the first business information program so as to cause the linking means to retrieve information from the first business information program, the first business information program being in a hierarchical state and the retrieved information comprising hierarchical information concerning the hierarchical state of the first business information program;
f) means for transmitting the retrieved information from the first business information program to the second business information program through the link; and
g) means for executing the second business information program utilizing the hierarchical information so that the second business information program is executed in a hierarchically similar state to the first business information program.

In another aspect, the present invention concerns an integrated business information system comprising:
a) a first business information program;
b) a second business information program;
c) a translation intermediary containing stored data;
d) a link between the business information programs;
e) linking means for executing the link;
f) means for executing the first business information program;
g) means for executing the linking means while executing the first business information program so as to cause the linking means to retrieve information from the first business information program when the first business information program is in a hierarchical state, the retrieved information comprising first hierarchical information concerning the hierarchical state of the first business information program;
h) means for transmitting the retrieved information from the first business information program to the translation intermediary;
i) means for cross-referencing the retrieved information with the stored data in the translation intermediary, the cross-referenced stored data comprising second hierarchical information concerning the desired hierarchical state of the second business information program, the second hierarchical information being related to the first hierarchical information;
j) means for retrieving from the stored data at least some of the data that have been cross-referenced with the retrieved information, the retrieved cross-referenced data including the second hierarchical information;
k) means for transmitting the retrieved cross-referenced data to the second business information program; and
l) means for executing the second business information program utilizing the retrieved cross-referenced data so that the second business information program is executed in a hierarchically similar state to the first business information program.

In another aspect, the present invention concerns an integrated business information system comprising:
a) storage means for storing a plurality of business information programs comprising at least first and second business information programs, the business information programs containing data portions;
b) processor means for executing the plurality of business information programs;
c) a link for linking the plurality of business information programs;
d) means for executing the first business information program;
e) linking means for executing the link while executing the first business information program so as to cause the linking means to retrieve information from the first business information program, the first business information program being in a hierarchical state and the retrieved information comprising hierarchical information concerning the hierarchical state of the first business information program;
f) means for transmitting the retrieved information from the first business information program to the second business information program through the link;
g) means for executing the second business information program utilizing the hierarchical information so that the second business information program is executed in a hierarchically similar state to the first business information program; and
h) means for visualization of the data portions of the business information programs.

In another aspect, the present invention concerns an integrated business information system comprising:
a) a first business information program containing a data portion;
b) a second business information program containing a data portion;
c) a translation intermediary containing stored data;
d) a link between the business information programs;
e) linking means for executing the link;
f) means for executing the first business information program;
g) means for executing the linking means while executing the first business information program so as to cause the linking means to retrieve information from the first business information program when the first business information program is in a hierarchical state, the retrieved information comprising first hierarchical information concerning the hierarchical state of the first business information program;
h) means for transmitting the retrieved information from the first business information program to the translation intermediary;
i) means for cross-referencing the retrieved information with the stored data in the translation intermediary, the cross-referenced stored data comprising second hierarchical information concerning the desired hierarchical state of the second business information program, the second hierarchical information being related to the first hierarchical information;
j) means for retrieving from the stored data at least some of the data that have been cross-referenced with the retrieved information, the retrieved cross-referenced data including the second hierarchical information;
k) means for transmitting the retrieved cross-referenced data to the second business information program;
l) means for executing the second business information program utilizing the retrieved cross-referenced data so that the second business information program is executed in a hierarchically similar state to the first business information program; and
m) means for visualization of the data portions of the first business information program and second business information program.

In some preferred embodiments, the visualization means comprises means for displaying the data contained in the plurality of business information programs, the means for displaying the data comprises means for displaying the data in a related manner, and the means for displaying the data in a related manner comprises means for displaying the data in hyperbolic tree format.

The present system enables a user to efficiently navigate between a group of heterogeneous proprietary software programs and allows such navigation between hierarchically similar states in each program. In preferred embodiments the system combines querying (both high-level and low-level), browsing, visualization, and analysis. Other features and advantages will be apparent from this disclosure.

### BRIEF DESCRIPTION OF THE DRAWINGS

To facilitate further description of the invention, the following figures are provided, in which:
Fig. 1 is a diagram of a first embodiment of the present invention;
Fig. 2 is a diagram of a relational database that may be used in the present invention;
Fig. 3 is a second diagram of a relational database that may be used the present invention;
Fig. 4 is a diagram of a second embodiment of the present invention;
Fig. 5 is a flow diagram illustrating the operation of the present invention;
Fig. 6 is a block diagram of an aspect of the present invention;
Fig. 7 is a screen shot of a front end web page used in an embodiment of the present invention; and
Fig. 8 is a screen shot of a hyperbolic tree used in another aspect of the present invention.

These figures are for illustrative purposes only and should not be used to unduly limit the scope of this invention.

### DETAILED DESCRIPTION

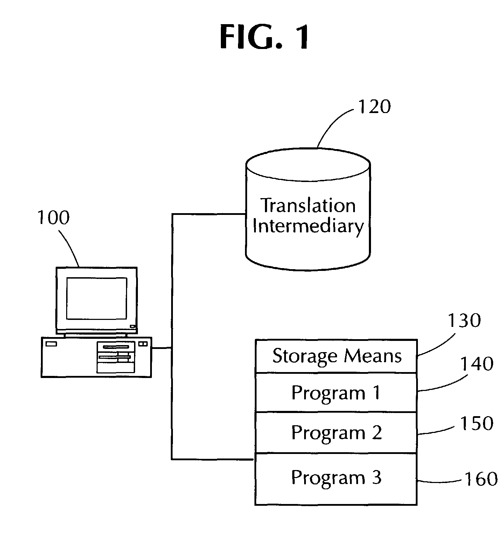

In accordance with the present invention, a system and method for the integration of and navigation through a plurality of business information programs are provided. Referring to Fig. 1, a block diagram of a first embodiment of the present invention, the system shown generally comprises computer 100 running translation intermediary 120. The computer also comprises storage means 130, on which are stored several business information programs 140, 150, and 160.

Computer 100 may be any computer, such as a typical personal computer, suitable for running business information programs. For example, the computer may be a PC running an Intel compatible processor or it may be a Macintosh compatible computer.

The business information programs 140, 150, 160 stored on storage means 130 of computer 100 may be any program typically used in the ordinary course of business (e.g., in the pharmaceutical industry) to store, track, and/or visualize business information. A pharmaceutical company will generally use at least several software packages falling, for example, within the broad categories of corporate information software, financial information software, financial model software, intellectual property information software, and data visualization software. A typical example of corporate information software is Investigational Drug database (IDdb) developed by Current Drugs. DSRAC (Daily Stock Report and Analyst Comments) from Tracer Technology is an example of financial information software. MPP (Major Products Portfolio Model) is an example of financial model software and is available from Tracer Technology. Cartia is an example of intellectual property information software. Spotfire, available from Spotfire, Inc., is an example of data visualization software. Hyperbolic Trees is another example of visualization software and is available from Inxight.

As discussed above, it is often desirable while using one program to jump to another program at a hierarchically similar state. This may be accomplished by establishing links between the various software packages and providing the user with a means for executing the links established between the various programs. Once a link is selected by a user, a search is conducted in the database of the target program, for example, the search may be automatically conducted by the target program (i.e., the second business information program) in the target program's database. In any case, after the search, the target program is started in a state that displays the result of this search (e.g.. a hierarchically similar state).

These links may be established between any programs (e.g., business information programs) where such jumping is desired. For example, links may be established between corporate information software, such as IDdb, and financial information software, such as DSRAC. Similarly, it may be desirable to establish links between financial information software and financial model software, such as MPP. The links are fully interactive and allow jumping to take place between programs in either direction.

The means for executing the links may be implemented in a number of ways. One method is to display a linking means within the business information program. This may be accomplished by incorporating a displayed "button" at the bottom of the program (e.g., at the bottom of the display screen) while the program is being executed. The button may be selected by moving a pointing device or its equivalent over the button and clicking the pointing device while still over the button. When the displayed button is selected, the linking means is then executed. Although a button is the preferred manner for executing the linking means, any other similar method may be used. For example, the linking means may be executed by the use of "hot keys," or pre-defined keystrokes from the keyboard of the computer, that when pressed will similarly execute the linking means.

The linking means may be incorporated into the business information program in a number of ways. One method is to obtain the source code for each business information program and modify it to display the desired linking means. For example, the business information programs may be modified to display a button, as discussed above. The business information program is further modified so that once the linking means is selected, specific information is collected and transmitted to a translation intermediary. Modifying the software to collect and transmit specific information is further facilitated if the business information programs are being executed in an OLE (object link embedding) compliant operating system (such as Windows 98) and are themselves OLE compliant. As discussed below, the translation intermediary cross-references the collected information and executes the target program in a hierarchically similar state as the initiating program.

Another method of incorporating the linking means into the business information program is to run the program in a windowed environment. In this case, the windowed environment, and not the business information program, displays the linking means. Thus, for example, the linking means may be displayed as a button within the windowed environment. The windowed environment monitors the progress of the executed program and any data that are entered or displayed. Once the linking means is selected, the windowed environment collects the necessary information (as discussed below) from the initiating program and transmits this collected information to the translation intermediary. The translation intermediary then cross-references the collected information and spawns another windowed environment, which executes the target business information program in a hierarchically similar state (i.e., a hierarchical state similar to the hierarchical state of the initiating program).

As previously indicated, many software packages use proprietary databases that are incompatible with each other. Moreover, different databases for different programs may store the same information in different ways. Thus, in either case, it will not be possible to link such business information programs directly and for the links between the programs to work properly, a translation intermediary between them will be required.

Referring again to Fig. 1, the translation intermediary 120 is shown. Once a user has decided to jump to another program by executing the linking means, the translation intermediary receives information from the initiating program and cross-references the received information to data stored within the translation intermediary. This stored data is retrieved and transmitted to the target program, allowing the target program to start at a hierarchically similar state to that of the initiating program. This is accomplished by using the cross-referenced data from the translation intermediary as a search string for the target program and starting the target program with the results of that search.

The translation intermediary may be any software construct that receives information and in response retrieves data that are related, in a predetermined way, to the received information. For example, the translation intermediary may be a simple two-dimensional look-up table. A search engine, such as those that are well known in the art, may be implemented to receive information from the initiating program, search the look-up table, retrieve the relevant data, and start the target program at a hierarchically similar state. The translation intermediary 120 may also be a commercially available database server. For example, the translation intermediary 120 may be a relational database, such as the SQL server from Microsoft. The translation intermediary may also be an object oriented database server, such as Versant's ODBMS.

Translation intermediary 120 is implemented in the embodiment of Fig. 1 in the following manner. Translation intermediary 120 is constructed by a user or programmer prior to linking the various business information programs. Key information from each business information program is cross-referenced with information from the other business information programs. The key information that is cross-referenced in the translation intermediary us dependant upon what types of programs are being used and what parts of these programs are to be linked. The cross-referenced data within the translation intermediary will determine which hierarchical level of the target program is displayed to the user when the target program is started. Thus, it is important to cross-reference information that will ensure that the target program is started at a hierarchically similar level as the initiating program. For example, if a link is created between a patent searching program and a drug information program, then, in the translation intermediary, the patent numbers should be cross-referenced to the name of the commercial embodiment of the claimed drug. The target program will be started with the results of a search in the data of the target program (i.e., a search in the data portion of the other (target) business information program) based on the cross-referenced retrieved data. In this case, the target program will be started displaying information relating to the commercial embodiment of the drug. Cross-referencing the information in this manner will ensure that the target program will be started at a hierarchically similar state to that of the initiating program.

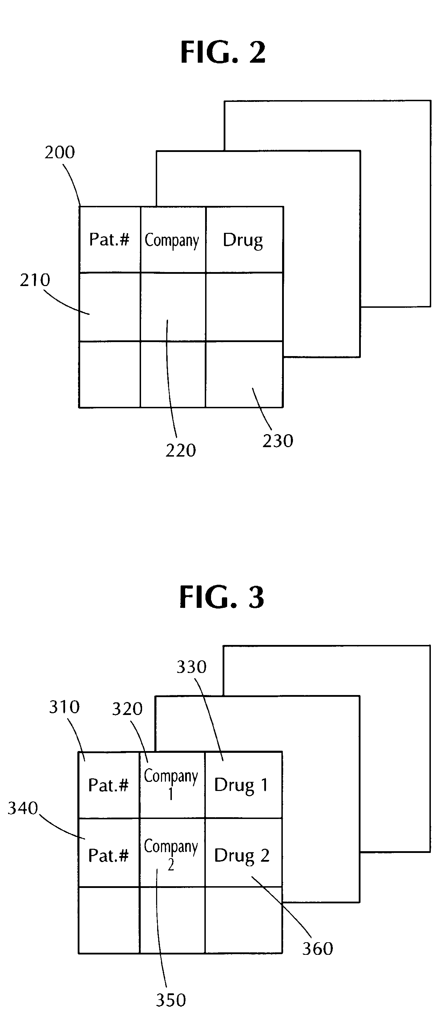

The data within the translation intermediary may be organized in a number of different ways. One way of organizing the translation intermediary is illustrated in Fig. 2. Here the translation intermediary is implemented using a relational database and, as shown, the translation intermediary is organized as a three-dimensional relational database. For example, it may store a series of "pages," where each page corresponds to a specific program stored on storage means 130 of computer 100. For example, as shown in Fig. 2, first page 200 of the database may correspond to the first business information program, which in this example is a patent searching program. A second business information program stores and organizes information relating to pharmaceutical manufacturing companies, and a third business information program stores and organizes information relating to commercially available drugs.

First column 210 of first page 200 of the database lists a series of patents. Third column 230 lists a series of commercially available drugs manufactured under each patent. Second column 220 cross-references the patent numbers with the corporation that manufactures each drug. Accordingly, by traversing the first row, the patent number of first column 210 is cross-referenced to both the commercial embodiment (in column 230) of the claimed invention of the patent and to the corporation (in column 220) that manufactures that commercial embodiment.

With this information, a second business information program may then be launched by the translation intermediary using the cross-referenced information. For example, this may be accomplished by the second business information program using as an initial search string the cross-referenced information from the translation intermediary. In that case, the second business information program will start by conducting a search using the name of the company making the commercial embodiment of a drug under the patent of interest (which company name is known from the searching, i.e., the cross-referencing, just conducted by the translation intermediary) and will launch the second business information program with the results concerning the company already displayed for the user. Accordingly, the second business information program will be launched in a hierarchically similar state to that of the initiating program and, most significantly, the user will be spared the time and effort of having to search the second business information program based on the company making a commercial embodiment under the patent and the user will also be prevented from making a mistake in doing so.

Instead of launching the second business information program from the first program, a third business information program may instead be launched from the first business information program. That may be accomplished in a similar manner by the translation intermediary using the cross-referenced information. The third business information program will accept as an initial search string the cross-referenced information from the translation intermediary. Thus, the third business information program will start by conducting a search based on the commercial embodiment of the claimed drug (which it knows from the searching. i.e., the cross-referencing, conducted by the translation intermediary) and will launch the third business information program with the appropriate results displayed. Accordingly, the third business information program will be launched in a hierarchically similar state to that of the initiating program and, most significantly, the user is spared the time and effort of having to search the third business information program based on the commercial embodiment of the claimed invention and of possibly making a mistake in doing so.

In a similar manner, a translation intermediary may be established for the second business information program as the initiating software and the first and third as the target software so that the user can jump from the second program to the first business information program or to the third business information program. That translation intermediary may be organized as a separate database distinct from page 200, or a single database may be used and entered by searching a different column of data (that is, using the column of data corresponding to the initiating software).

Similarly, a translation intermediary may be established for the case where the third business information program is the initiating software and either the first or second business information program is the target, and that translation intermediary may be a separate database or the same database used when one of the other business information programs is the initiating software. In other words, there is no theoretical upper limit to the number of business information programs to which the method and system of this invention can be applied. Furthermore, as will be appreciated by one skilled in the art, the translation intermediary may be any arrangement that is within the scope of the claims and that has the advantages of this invention.

Returning to the example where the patent number is produced through use of the first business information program and jumping to either the second or third business information program is desired, the translation intermediary database may be constructed so that multiple searches are performed based on one patent number. That may be necessary (or at least desirable) if, for example, there is more than one commercial embodiment of a specific patent or there is more than one corporation producing a product covered by that patent.

As shown in Fig. 3, the first row is organized as before (in Fig. 2): first column 310 lists the patent number, second column 320 lists the corporation that produces the commercial embodiment of the claimed drug, and third column 330 lists the name of the commercial embodiment of the claimed drug. In this case, there is more than one commercial embodiment of the claimed drug and, thus, a second row has been inserted. The second row (comprising 340, 350, 360) lists the same patent number as listed in the first row (comprising 310, 320, and 330); however, in the second row, the patent number is cross-referenced with a different drug name in the third column (360) and a different company that produces that drug (350). Accordingly, the user will be presented (e.g., by the linking program, by the windowed environment) with a choice of searching the target program (either the second business information program or the third business information program) based on the first entry, the second entry, or both entries.

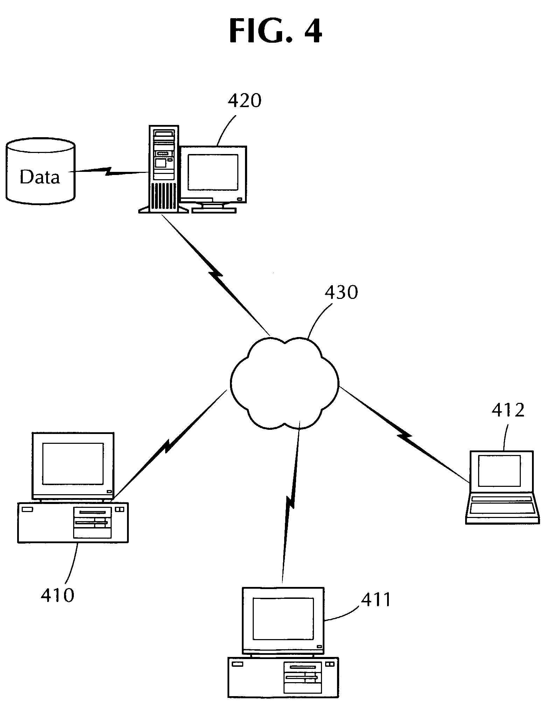

Referring now to Fig. 4, in the preferred embodiment shown therein, the translation intermediary is a database server, such as the relational database SQL from Microsoft or the object orientated database server Versant ODBMS from Versant. In this embodiment, the database server resides on remote server 420. Any number of terminals 410, 411, and 412 may access the database server 420 through network 430, which network may be any suitable type of high-speed network (e.g., the Internet or an internal intranet). The advantages of storing the database server in a central location are numerous. A central location facilitates maintenance of the database; any changes or updates to the database need to be carried out in only one location. Furthermore, centralizing the database in one location ensures that all of the remote computers 410, 411, and 412 use the same cross-referenced terms and receive consistent results from their queries.

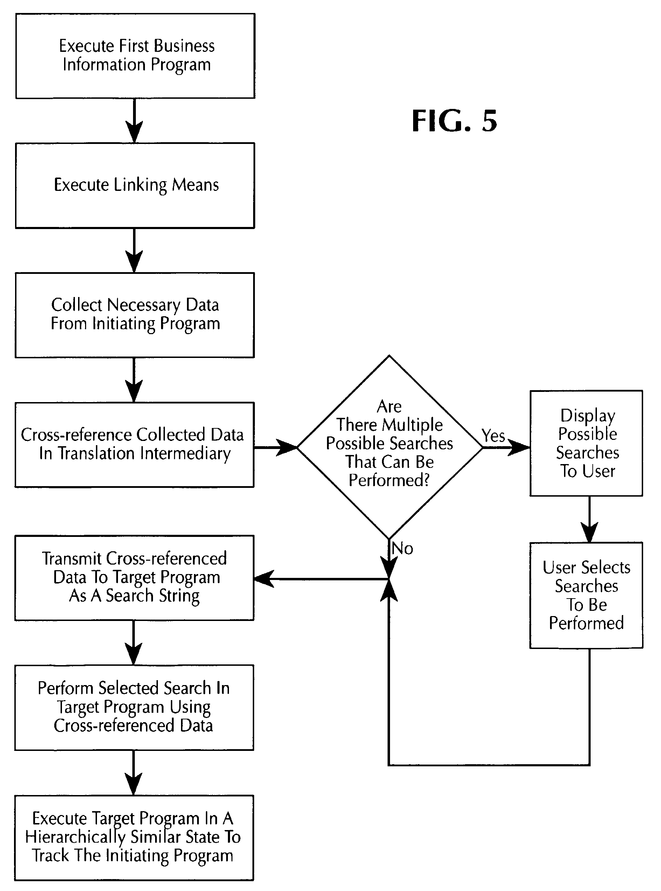

Fig. 5, a flow diagram of the present invention, illustrates overall operation of a preferred embodiment of the present invention. First, the user executes the desired (first) business information program. This can be accomplished in the normal manner allowed in the particular operating system being employed. Alternatively, this can be accomplished by using a front-end web page, as discussed below. Once the user has completed the research in the initiating program or desires to cross-reference a particular piece of information to another program, the linking means (e.g., a button) within the initiating program or the environment is selected. That causes the linking means (whether being run through the windowed environment or as incorporated changes to the business information program) to gather key information (necessary data) from the initiating software and to transmit the gathered key information to a translation intermediary.

Next, the translation intermediary cross-references the data (information) transmitted by the first business information program (and received by the translation intermediary) to data (information) stored in the database of the translation intermediary and retrieves from that database the appropriate data (which corresponds to the data transmitted from the first business information program) for transmission to the target program. If there are multiple possible searches that can be performed, the translation intermediary displays all the possible searches. The user then selects one or more searches of those that were displayed, and that selection is transmitted to the target software. (In other embodiments, an external program can perform the search on the target software's database.) The target software then performs the selected searches using the data retrieved from the translation intermediary, which data have been transmitted to the target software. If there was only one possible search that could be performed, the cross-referenced information is automatically transmitted to the target software without the user needing to make a choice and that one search is performed.

As previously explained, the data collected from the first business information program and transmitted to the translation intermediary will contain data (information) indicating (either inherently or explicitly) the hierarchical level (state) at which it was operating (i.e., being used). Similarly, the data obtained from the translation intermediary (the retrieved cross-referenced data) will also contain (either inherently or explicitly) hierarchical data (information), but concerning the hierarchical level (state) that is desired in the target software (the software to which the operating jump will be made). In other words, through use of this invention, the target software will be executed in a hierarchically similar state to that of the initiating software. Hence, use of the translation intermediary obviates the need for the user to commence execution of the target software and then to run a search to find in it information corresponding to the information obtained from the first (initiating) business information program. That saves time, makes searching more efficient, and avoids the possibility that errors will be made in executing the target software.

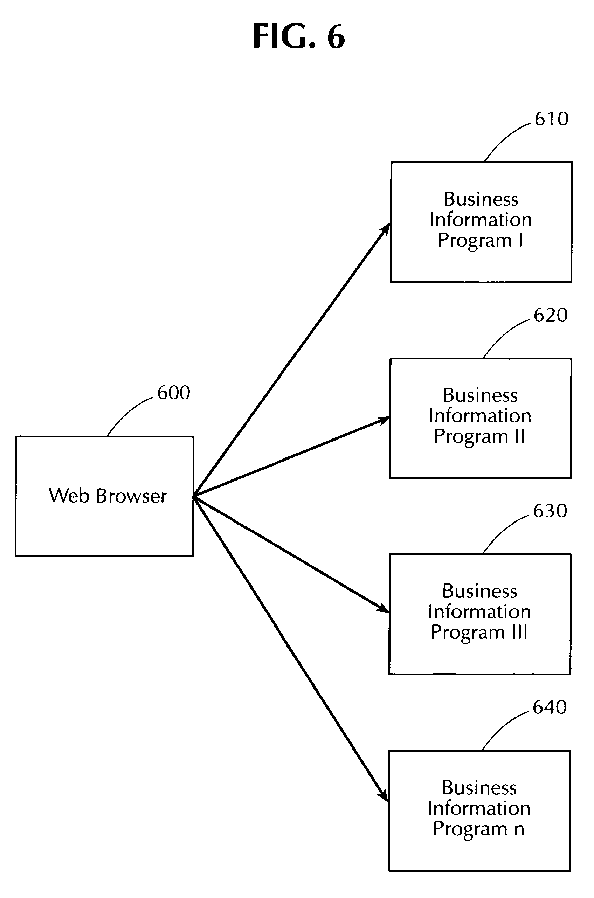

Integration of business information programs may be further increased by the addition of a web browser running a front-end web menu page. In Fig. 6, a block diagram of the interaction of a web page with the various business information software, web browser 600 allows the user to easily launch any of the business information programs 610, 620, 630, 640. The web Browser 600 may be any browser that is HTML compliant. For example, Internet Explorer 4.0, developed by the Microsoft corporation, and Netscape Navigator from Netscape may be used.

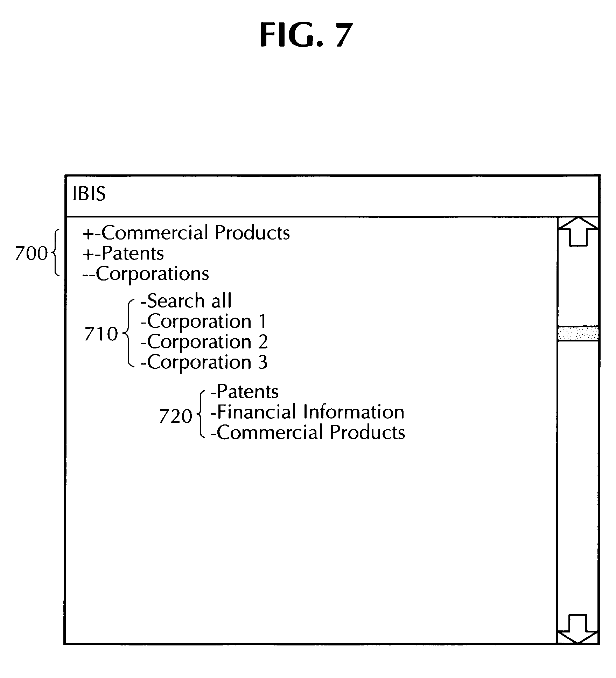

One way of implementing this front-end web page is shown in Fig. 7, where the HTML links are generally organized into a tree structure. The links may first be separated into broad categories 700, dependent on the types of links to be established. Once a user selects a broad category 700 (e.g., "corporations"), it is expanded into sub-categories 710 (e.g., "search all," "corporation 1," etc.). In other words, after selecting the broad "corporations" category, the user is given a choice of searching all corporations or any individual corporation. If, for example, the user selects "corporation 3," the user is then presented with all the choices under sub-category 720 ("patents," "financial information," etc.) and the user can select which database is to be searched. Making that selection (e.g., by highlighting the choice and depressing the "enter" key) causes the selected program to be launched.

In another aspect, the present invention provides a system coupling querying (low-level through high-level), browsing (navigating), visualization, and analysis, so as to further integrate the business information programs, and thus facilitate decision making processes.

This aspect of the present invention presents information to users in dynamic, customizable ways that facilitate the decision making process through the tight integration of querying, browsing, visualization, and analysis across the entire relevant information space. For example, the space relevant to the pharmaceutical industry (which has been used herein for the purpose of exemplifying the features and advantages of the present invention) includes areas such as disease areas and therapeutic categories, drugs and drug families, drug side effects, toxicological information, pharmacogenomics, gene families, chemical structure classes and chemical libraries, physiochemical properties, drug mechanistic classes, patents, drug portfolios, licensing opportunities, marketing strategies, companies and company financial information, purchasing and inventory information, manufacturing processes, synthesis processes, drug screening results including clinical and non-clinical studies, competitive intelligence information, and regulatory information and documentation.

Information within this space can be viewed in different ways. For example, this information may be viewed from a process perspective, which may include best practice. Best practice may cover typical Drug Discovery/Development processes, basic research activity, patenting processes, construction and evaluation of licensing opportunities and strategies, legal documentation, regulatory filing processes, development and implementation of marketing strategies and plans, development of business strategies and plans, construction and evaluation of drug portfolios, construction and evaluation of competitive landscapes, drug manufacturing and distribution processes, development and implementation of sales strategies and plans, development of clinical research plans.

Another example of the perspective from which the data in the space may be viewed is an information map perspective, such as a map including some or all of the categories described above. Another example is a business organization perspective, such as people, departments, and roles. Another perspective is a transactional perspective, such as licensing negotiations and scheduling of day to day activities.

The different perspectives, including process perspective, information perspective, business perspective, and transactional perspective, can be presented or visualized in different ways, such as through hyperbolic tree displays, cartographic maps, file manager style displays, business or process flow diagrams, and any other means that organize the specific information needed to drive decisions in a visual way and that guide decision making in accordance with best practices. Decision making can also be facilitated by the automated execution of intelligent agents that encapsulate best practices or any other business rules. Desirably these means also provide an alerting mechanism for monitoring changes in the information space or environments.

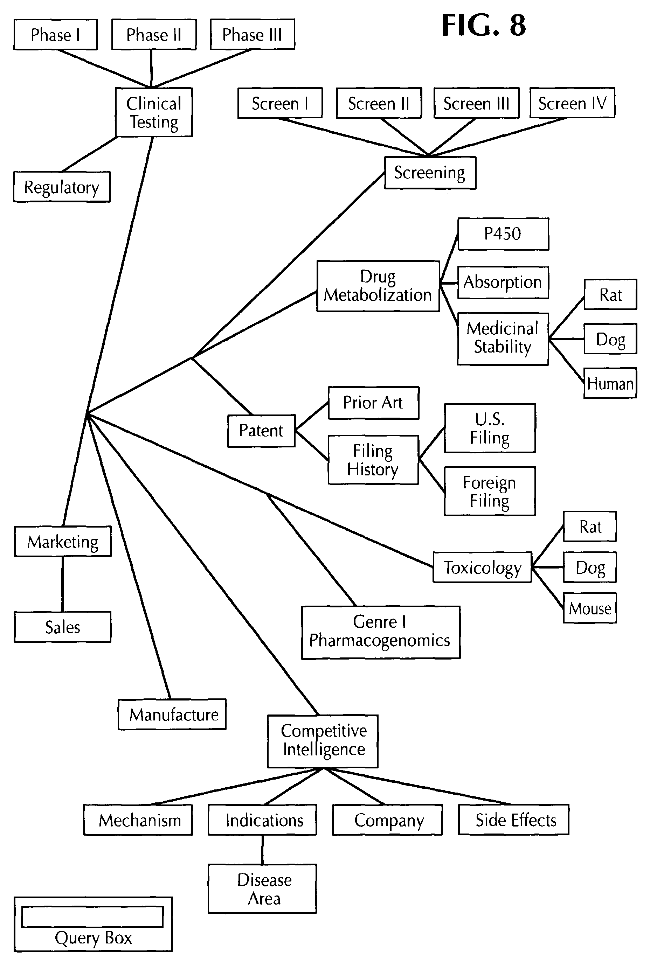

A key element of this aspect of the invention is the tight integration of internal and external information sources relevant to the desired field or industry, e.g., the pharmaceutical industry. This can be achieved in many ways. As described above, this integration may be accomplished by using translation tables or linking fields. This may also be accomplished through the use of techniques for deriving pharmaceutically relevant categories and the relationship between those categories in the information space from raw data sources, for example, internal reports, biological sequence databases, textual information in databases, literature sources, and patent applications. This information may also be acquired through the use of data mining and text mining techniques combined with controlled vocabularies that are relevant to the pharmaceutical industry. For example, data mining techniques may be used for combing news repositories. These techniques may be combined with standard dictionaries, such as the UMLS produced by the National Library of Medicine or controlled lexicons available from other companies such as CAS. Techniques to be used for deriving these categories may include known multiple sequence alignment and biological, chemical, and genomic data analysis methods for deriving categories as well as known text mining tools, for example, Cartia, Semio, IBM Intelligent Miner for Text, Lexiquest, MNIS, and Inxight. The derived categories allow the mapping of the raw data generated as part of the pharmaceutical processes defined above onto a higher level framework (for example, see Fig. 8) and may be arranged to reflect user requirements, state of investigation, or best practice.

The intelligent agents that encapsulate best practices or business rules may be constructed through the application of analysis methods and tools that range from computational predictive models to statistical approaches to more traditional data mining techniques, such as classification, clustering, neural nets, genetic algorithms, recursive partitioning, and pattern recognition techniques, and may include methods such as phylogenetic tree reconstructions and multiple sequence alignments. These intelligent agents may also include tools such as Blast, Clementine, Partek, SAS, Darwin, DataDetective, DataEngine, Data Miner, Datasage, Delta Miner, IBM Intelligent Miner for Data, IDIS Data Mining Suite, INSPECT, K-wiz, Kepler, Knowledge Studio, Magnify PATTERN, NeoVista, Nuggets, ORCHESTRATE. Pilot Discovery Server, Polyanalyst Family, and SPSS. The analysis methods, tools, and derived business rules capture processes, transactions, and information space as described above and the relationships across them. They can be executed in an interactive fashion or built into models and intelligent agents that can be executed automatically.

Fig. 8 is a screen shot of a hyperbolic tree arrangement of the data in the business information programs comprising the system. Entering a "leaf" of the tree (e.g., by highlighting it and depressing the "Enter" key) will execute the program at the hierarchical level associated with that leaf. When a desired hierarchical level (state) within that program has been reached by the user, the "jumping" method previously described can be used to execute the program associated with another leaf of the tree at a similar hierarchical level (state).

Variations and modifications will be apparent to those skilled in the art and the claims are intended to cover all modifications and variations that fall within the true spirit and scope of the invention.

## Claims

1. A method for integrating a plurality of business information programs comprising at least a first business information program and a second business information program, there being a link between the business information programs and a linking means for executing the link, the method comprising:
a) executing the first business information program;
b) executing the linking means while executing the first business information program, thereby causing the linking means to retrieve information from the first business information program, the first business information program being in a hierarchical state and the retrieved information comprising hierarchical information concerning the hierarchical state of the first business information program;
c) transmitting the retrieved information from the first business information program to the second business information program through the link; and
d) executing the second business information program utilizing the hierarchical information so that the second business information program is executed in a hierarchically similar state to the first business information program.

2. A method for integrating a plurality of business information programs comprising at least a first business information program and a second business information program, there being a link between the business information programs and a linking means for executing the link, the method comprising:
a) executing the first business information program;
b) executing the linking means while executing the first business information program, thereby causing the linking means to retrieve information from the first business information program, the first business information program being in a hierarchical state and the retrieved information comprising first hierarchical information concerning the hierarchical state of the first business information program;
c) transmitting the retrieved information from the first business information program to a translation intermediary, the translation intermediary having stored data;
d) cross-referencing the retrieved information with the stored data in the translation intermediary, wherein the cross-referenced stored data comprises second hierarchical information concerning the desired hierarchical state of the second business information program;
e) retrieving from the stored data at least some of the data that have been cross-referenced with the retrieved information, the retrieved cross-referenced data including the second hierarchical information;
f) transmitting the retrieved cross-referenced data to the second business information program; and
g) executing the second business information program utilizing the retrieved cross-referenced data so that the second business information program is executed in a hierarchically similar state to the first business information program.

3. The method of Claims 1and 2 wherein the method further comprises searching a data portion of the second business information program using the retrieved information.

4. The method of Claim 1 the method further comprising transmitting the retrieved information to a translation intermediary, the translation intermediary cross-referencing the retrieved information with data stored within the translation intermediary.

5. The method of Claims 1 and 2 wherein the first business information program is a program selected from the group consisting of a corporate information program, a financial information program, a financial modeling program, an intellectual information property program, and a data visualization program.

6. The method of Claims 1 and 2 wherein the second business information program is a program selected from the group consisting of a corporate information program, a financial information program, a financial modeling program, an intellectual property information program, and a data visualization program.

7. The method of Claims 1 and 2 wherein step (a) further comprises executing the first business program in a windowed environment.

8. The method of Claim 7 wherein step (b) further comprises executing the linking means within the windowed environment.

9. The method of Claims 1 and 2 wherein step (b) further comprises executing the linking means within the first business information program.

10. The method of Claims 1 and 2 wherein step (a) further comprises executing the first business information program from a front-end web page.

11. The method of Claims 1 and 2 wherein step (a) further comprises executing the first business information program on a first processor and step (d) further comprises executing the second business information program on a second processor.

12. The method of Claims 1 and 2 further comprising executing it on a single processor means.

13. The method of Claims 1 and 2 further comprising executing it on a plurality of processor means.

14. An integrated business information system comprising:
a) storage means for storing a plurality of business information programs comprising at least first and second business information programs;
b) processor means for executing the plurality of business information programs;
c) a link for linking the plurality of business information programs;
d) means for executing the first business information program;
e) linking means for executing the link while executing the first business information program so as to cause the linking means to retrieve information from the first business information program, the first business information program being in a hierarchical state and the retrieved information comprising hierarchical information concerning the hierarchical state of the first business information program;
f) means for transmitting the retrieved information from the first business information program to the second business information program through the link; and
g) means for executing the second business information program utilizing the hierarchical information so that the second business information program is executed in a hierarchically similar state to the first business information program.

15. An integrated business information system comprising:
a) a first business information program;
b) a second business information program;
c) a translation intermediary containing stored data;
d) a link between the business information programs;
e) linking means for executing the link;
f) means for executing the first business information program;
g) means for executing the linking means while executing the first business information program so as to cause the linking means to retrieve information from the first business information program when the first business information program is in a hierarchical state, the retrieved information comprising first hierarchical information concerning the hierarchical state of the first business information program;
h) means for transmitting the retrieved information from the first business information program to the translation intermediary;
i) means for cross-referencing the retrieved information with the stored data in the translation intermediary, the cross-referenced stored data comprising second hierarchical information concerning the desired hierarchical state of the second business information program, the second hierarchical information being related to the first hierarchical information;
j) means for retrieving from the stored data at least some of the data that have been cross-referenced with the retrieved information, the retrieved cross-referenced data including the second hierarchical information;
k) means for transmitting the retrieved cross-referenced data to the second business information program; and
l) means for executing the second business information program utilizing the retrieved cross-referenced data so that the second business information program is executed in a hierarchically similar state to the first business information program.

16. The system of Claims 14 and 15 wherein the second business information program further comprises a data portion.

17. The system of Claims 14 and 15 wherein the second business information program further comprises search means for searching using the retrieved information.

18. The system of Claims 14 and 15 further comprising a translation intermediary for receiving the retrieved information and cross-referencing the retrieved information with data stored within the translation intermediary.

19. The system of Claims 14 and 15 wherein the first business information program is a program selected from the group consisting of a corporate information program, a financial information program, a financial modeling program, an intellectual information property program, and a data visualization program.

20. The system of Claims 14 and 15 wherein the second business information program is a program selected from the group consisting of a corporate information program, a financial information program, a financial modeling program, an intellectual property information program, and a data visualization program.

21. The system of Claims 14 and 15 further comprising a windowed environment and the processor means further comprises means for executing the plurality of business information programs in the windowed environment.

22. The system of Claim 21 further comprising means for executing the linking means in the windowed environment.

23. The system of Claims 14 and 15 further comprising means for executing the linking means within the first business means.

24. The system of Claims 14 and 15 further comprising means for executing the first business information program from a front-end web page.

25. The system of Claims 14 and 15 further comprising first and second processors and means for executing the first business information program on the first processor and means for executing the second business information program on the second processor.

26. The system of Claims 14 and 15 wherein the processor means is a single processor.

27. The system of Claims 14 and 15 wherein the processor means comprises a plurality of processors.

28. The system of claim 14 and 15 wherein the business information programs contain data portions and the system further comprises means for visualization of those data portions.

29. The system of claim 28 wherein the visualization means comprises means for displaying the data contained in the plurality of business information programs.

30. The system of claim 29 wherein the means for displaying the data comprises means for displaying the data in a related manner.

31. The system of claim 30 wherein the means for displaying the data in a related manner comprises means for displaying the data in hyperbolic tree format.

32. The system of claim 28 further comprising means for browsing the data portions of the business information programs.

33. The system of claim 32 wherein the visualization means comprises means for displaying the data contained in the plurality of business information programs.

34. The system of claim 33 wherein the means for displaying the data comprises means for displaying the data in a related manner.

35. The system of claim 34 wherein the means for displaying the data in a related manner comprises means for displaying the data in hyperbolic tree format.

36. The system of claim 38 wherein the business information programs contain data portions and the system further comprises means for visualization of those data portions.

37. An integrated business information system comprising:
a) storage means for storing a plurality of business information programs comprising at least first and second business information programs,the business information programs containing data portions;
b) processor means for executing the plurality of business information programs;
c) a link for linking the plurality of business information programs;
d) means for executing the first business information program;
e) linking means for executing the link while executing the first business information program so as to cause the linking means to retrieve information from the first business information program, the first business information program being in a hierarchical state and the retrieved information comprising hierarchical information concerning the hierarchical state of the first business information program;
f) means for transmitting the retrieved information from the first business information program to the second business information program through the link;
g) means for executing the second business information program utilizing the hierarchical information so that the second business information program is executed in a hierarchically similar state to the first business information program; and
h) means for visualization of the data portions of the business information programs.

38. An integrated business information system comprising:
a) a first business information program containing a data portion;
b) a second business information program containing a data portion;
c) a translation intermediary containing stored data;
d) a link between the business information programs;
e) linking means for executing the link;
f) means for executing the first business information program;
g) means for executing the linking means while executing the first business information program so as to cause the linking means to retrieve information from the first business information program when the first business information program is in a hierarchical state, the retrieved information comprising first hierarchical information concerning the hierarchical state of the first business information program;
h) means for transmitting the retrieved information from the first business information program to the translation intermediary;
i) means for cross-referencing the retrieved information with the stored data in the translation intermediary, the cross-referenced stored data comprising second hierarchical information concerning the desired hierarchical state of the second business information program, the second hierarchical information being related to the first hierarchical information;
j) means for retrieving from the stored data at least some of the data that have been cross-referenced with the retrieved information, the retrieved cross-referenced data including the second hierarchical information;
k) means for transmitting the retrieved cross-referenced data to the second business information program;
l) means for executing the second business information program utilizing the retrieved cross-referenced data so that the second business information program is executed in a hierarchically similar state to the first business information program; and
m) means for visualization of the data portions of the first business information program and second business information program.
